# DEMANDE DE BREVET EUROPEEN

(11) **EP 1 119 190 A2**
(43) Date de publication de la demande: **25.07.2001**
(21) Numéro de dépôt: 01400167.1
(22) Date de dépôt: 19.01.2001
(51) Int. Cl.: H04N 5/00, H04N 7/24

(54) **Procédé de collecte de signaux de paramètres de réglage dans un décodeur de télévision**

(30) Priorité: 19.01.2000 FR 0000653
(71) Demandeur: SAGEM SA, 75116 Paris (FR)
(72) Inventeur: Torche, Fabien, 95800 Cergy Saint Christophe (FR)
(74) Mandataire: Schmit, Christian Norbert Marie

(57) **Abrégé**

Pour résoudre un problème de fourniture en temps réel d'informations distribuées avec le flux dans le cadre de la télévision numérique, on prévoit de mémoriser, dans des mémoires non volatiles organisées selon des tables des normes DVB et MPEG, des paramètres de réglages correspondant à un enregistrement préalable. Puis, au fur et à mesure du zapping de l'utilisateur, on prévoit de mettre à jour les tables mémorisées avec les informations de paramètres disponibles dans le flux reçu par le décodeur. Pour trouver la désignation correcte du flux, on mesure la fréquence de porteuse démodulée, et on accède à partir de cette information aux tables du flux qui correspondent au programme visualisé.

## Description

La présente invention a pour objet un procédé de collecte dans un décodeur de télévision de signaux de paramètres de réglage ou d'information de plusieurs services dans ce décodeur de télévision. L'invention est plus particulièrement destinée à la télévision dite numérique, que des signaux pour celle-ci soient transmis par un câble (dans des bandes de fréquence de 170 à 862 MHz), par un satellite (dans des bandes de fréquence de 10,3 à 12,8 GHz), ou par voie terrestre (dans des bandes de 17 à 862 MHz). Le but de l'invention est de simplifier la reconstruction par un décodeur des tables de paramètres qui permettent son réglage.

Typiquement un récepteur de télévision numérique comporte un décodeur relié par ailleurs à un dispositif de visualisation. Le décodeur comporte des moyens de réception pour recevoir les signaux émis et des moyens de formatage pour transformer les signaux reçus en des signaux applicables directement sur les organes de commande du dispositif de visualisation. Pour un tube cathodique, il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue les tables dites SI, System Information - Information Système - qui dans la norme DVB, peuvent représenter un titre d'un programme diffusé, une heure de début, une heure de fin, ainsi que d'autres caractéristiques. Le contenu des tables SI intéresse particulièrement l'utilisateur car elles conduisent à afficher des informations qui permettent à l'utilisateur de choisir le programme qu'il veut visualiser. D'autres tables dites PSI Program Specific Information - Information Spécifique de Programme - décrite dans la norme MPEG sont des tables fonctionnelles d'identification de paquets vidéo audio ou de données. Elles représentent en définitive le protocole de transmission et l'architecture des paquets numériques transmis ainsi que leur signification. Les tables PSI servent à afficher les images d'un programme visualisé.

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets et dans certains cas 4096 octets. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données ou autre. Dans chaque section, des identifiants permettent d'attribuer les paquets de données à des tables particulières parmi d'autres. En réception, un décodeur ne sait pas à priori comment sont répartis les paquets de données mais il connaît le découpage des sections. Le décodeur doit donc lire l'identifiant dans chaque section et réorganiser les données pour les affecter aux bonnes tables. Toutes les tables sont éditées par les opérateurs de télévision ou les gestionnaires de média de transport, sont incorporées dans le flux de cet opérateur, et sont acheminées vers les utilisateurs par les différents média.

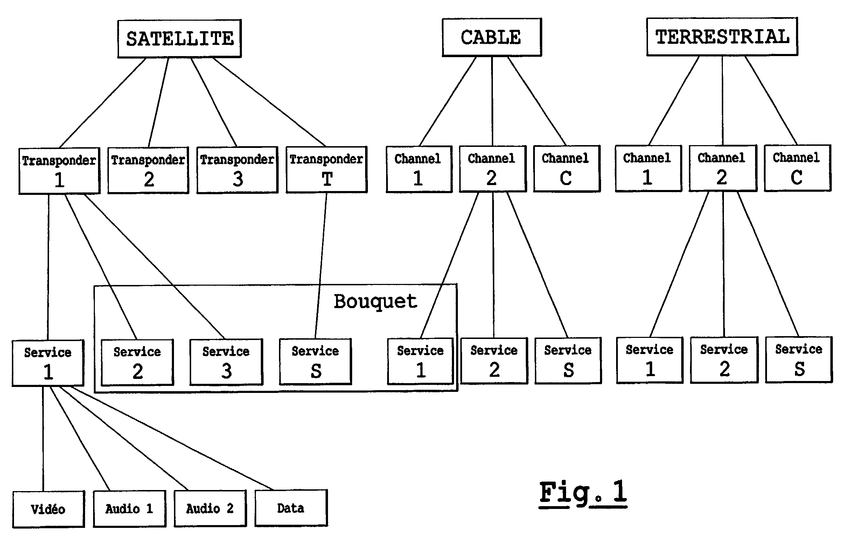

La figure 1 montre une représentation des différents médias de transmission. Elle permet par ailleurs de figer le vocabulaire utilisé dans le domaine. Des moyens d'émission réception comportant des satellites, des câbles ou des dispositifs de rediffusion terrestre constituent des réseaux de transmission. Pour chaque média de transmission il existe une table NIT, Network Information Table - Table d'Information de Réseau, qui indique le nom du réseau, le numéro du réseau, et pour chacun des multiplexes du réseau, des transpondeurs quand il s'agit de liaison par satellite, des informations telles que fréquence de modulation, position orbitale de bits, polarisation etc... Des informations similaires sont contenues dans les tables NIT des médias de transmission câble ou terrestre.

Les informations contenues dans les tables NIT sont des paramètres physiques permettant essentiellement à un décodeur de se caler en fréquence pour capter chaque multiplex. Chaque table NIT comporte, pour un transpondeur désigné, une liste de services véhiculés par le transpondeur. Cette liste est normalement limitée, quelquefois à 8 services, du fait de la limitation de bande passante réservée pour un transpondeur. Par service on entend classiquement ce que les utilisateurs appellent une chaîne de télévision, par exemple une chaîne diffusant au cours de la journée des programmes successifs les uns aux autres. Néanmoins les services peuvent être des services uniquement audio ou des services de données ou autres, notamment interactif.

Chaque service est ainsi identifié dans la table NIT par un triplet représentant une information dite Original Network Id (ontwk_id) - Identification de réseau origine. Un service est encore identifié par l'information Transport Stream Id (ts_id) - Identification de multiplex, typiquement cette information désigne un des transpondeurs en relation avec le satellite. Enfin le service va être identifié par une information dite Service Id (svc_id) - Identification de Service, qui sera en pratique un numéro attribué, par un opérateur qui gère le satellite, à la transmission de ce service. Dans le message correspondant à la table NIT le décodeur récupère essentiellement le triplet selon la norme DVB ainsi que les paramètres physiques (PSI) du transpondeur.

Chaque transpondeur émet une table SDT qui comporte des sous-tables. Chaque sous-table décrit chacun des services qui sont véhiculés par le transpondeur. Ces services peuvent faire partie des services distribués par un transpondeur ou par un autre transpondeur. Ceci est identifié à partir de la table NIT.

En définitive toute une architecture de tables est ainsi distribuée, en particulier selon la norme EN 300 468 V1.3.1 et le but du décodeur est de reconstruire toutes les tables pour disposer des informations de réglage ainsi que des informations à montrer en visualisation pour les utilisateurs.

En ce qui concerne les transpondeurs, chacun diffuse en outre une table dite PAT, Program Association Table - Table des programmes associés, table qui elle-même donne la liste de tables PMT, Program Map Table - Table de composants des programmes, qui sont associées à chacun des services.

Au niveau des services, on trouvera des tables dites EIT, Event Information Table - Table d'événements, et des tables PMT. Les tables EIT se réfèrent à chaque service, à partir de son triplet d'identification selon la norme DVB, et indiquent pour ce service l'heure de début, la durée ou l'heure de fin, le statut, ainsi que d'autres informations relatives à un programme diffusé. Les tables EIT sont par ailleurs dédoublées en EITp et EITf pour représenter une table correspondant à l'instant présent (p), et ainsi qu'une autre table correspondant à un instant suivant (f, following). Les deux tables EITp et EITf sont de même structure mais possèdent chacune un identifiant renseignant sur leur qualité.

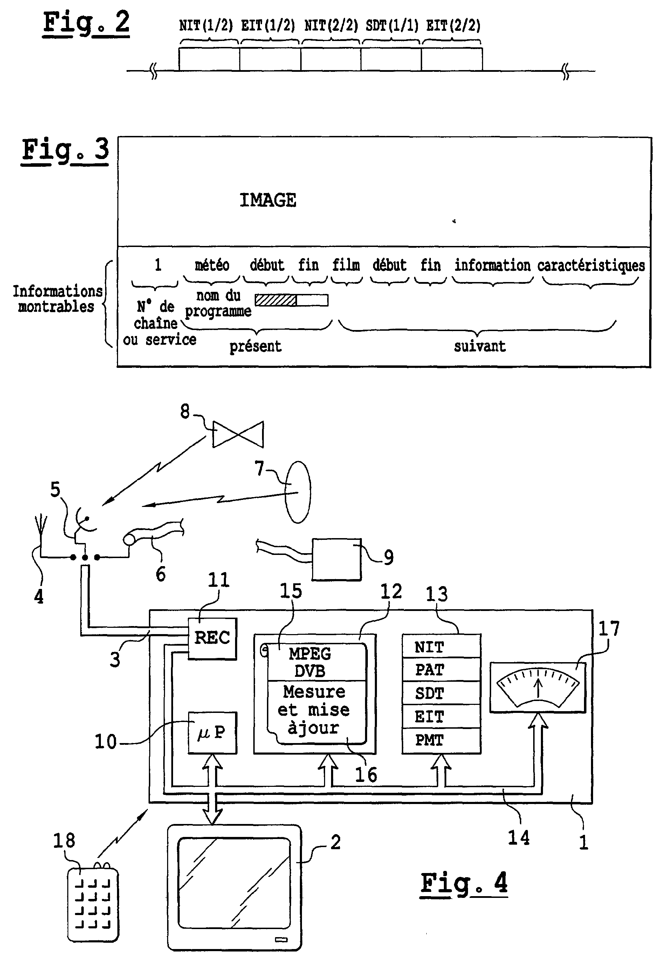

En pratique, dans le flux des sections de paquets, figure 2, les tables NIT, SDT et EIT sont transmises par parties imbiquées dans le temps selon les normes. Elles possèdent des identifiants dans le flux égaux respectivement à 0x0010, 0x0011, et 0x0012 complétés par l'information ts_id. Elles sont complétées chacune par des bits de bourrage quand elles n'occupent pas toute la place qui leur est allouée.

La figure 3 montre typiquement une image diffusée sur un dispositif de visualisation recevant des signaux selon ce qui a été décrit ci-dessus. L'image visualisée peut être complétée par des informations montrables concernant le numéro de la chaîne ou en pratique du service, le nom du programme, ainsi que son heure de début et son heure de fin. Cette dernière indication peut par ailleurs être remplacées par un index fluctuant dans le temps montrant d'une manière intuitive le temps déjà écoulé pour le programme et le temps restant à diffuser. Par ailleurs, ces informations montrables comportent les indications correspondant à un programme suivant avec, encore une fois, le nom du programme, l'heure de début, l'heure de fin ainsi que diverses informations (titre d'un film, nom des acteurs) et des caractéristiques, présence d'un carré blanc ou autre. Les informations montrables ne sont pas systématiquement juxtaposées à côté de l'image. Elles peuvent être affichées par l'utilisateur en appuyant sur une touche particulière de sa télécommande.

La norme MPEG2 permet de multiplexer plusieurs programmes dans un même Transport Stream (TS) ou canal. Cette norme est complétée par la norme DVB qui permet la constitution et le zapping sur plusieurs transpondeurs au sein d'un même et unique réseau. Les programmes sont repérés par un triplet (ontwk_id, ts_id, et svc_id). Chaque opérateur diffuse donc une signalisation plus ou moins complète permettant la constitution d'une liste de services accessibles à partir d'une connexion unique sur un transpondeur. Dans ce cadre, les paramètres de connexion sont soit saisis par l'utilisateur, à l'écran, soit figés dans le décodeur. Afin de permettre à un utilisateur de récupérer une liste complète de tous les services diffusés sur tous les réseaux et quels que soient les opérateurs, un balayage (dit aussi scanning) a été mis en place. Il se traduit par une succession de visites de transpondeurs permettant de récupérer des services de plusieurs réseaux, et non plus par une installation unique. Le principe du balayage est le suivant. On analyse une plage de fréquence avec les différents paramètres associés (débit, symbole etc...). Pour trouver tous les pics de fréquence accessibles. Sur chacun des pics on récupère la liste de services diffusés par les opérateurs. On analyse ensuite les tables SI sensées décrire une liste de services à l'aide des descripteurs selon la norme DVB. On analyse ensuite les tables PSI qui permettent d'élaborer des listes de services sans que l'opérateur ait besoin de les décrire dans les tables SI.

Le problème à résoudre avec la présente invention est celui de pouvoir afficher en temps réel, notamment lorsqu'un utilisateur zappe avec sa télécommande, des informations montrables correspondant au nouveau programme qu'il regarde, même si celui-ci est diffusé par un autre transpondeur, voire un autre réseau.

Dans l'état de la technique, pour disposer de ces informations montrables et autres, il est prévu de faire balayer par le décodeur toutes les possibilités en fréquence et de recevoir, de traiter et de stocker toutes les tables transmises. En pratique il n'est demandé à l'utilisateur que de désigner un satellite, par exemple INTELSAT, et éventuellement de se limiter à une plage plus petite d'exploration en fréquence, puis de laisser le décodeur effectuer le balayage, recevoir toutes les chaînes et acquérir toutes les informations utiles.

Cette manière de faire présente plusieurs inconvénients. Premièrement le balayage est lent, il peut durer de l'ordre de 20 minutes s'il y a beaucoup de services (de chaînes de télévision distribuées et captables). On peut difficilement demander à l'utilisateur de patienter une telle durée. L'expérience montre par ailleurs que les utilisateurs ne le provoquent pas. Autre inconvénient, l'utilisateur reçoit ainsi de nombreuses informations dont, pour une grande part, il n'a que faire. En pratique, les informations qu'il reçoit sont le fait de l'opérateur et l'utilisateur n'a pas la possibilité d'écarter les informations inutiles notamment dans le but de gagner du temps pour l'acquisition. Notamment si beaucoup de services sont disponibles à partir d'un transpondeur le décodeur devra acquérir toutes les tables EIT present, EIT following ainsi que les tables PMT pour tous ses programmes. Toutes ces tables occupent alors beaucoup de place en mémoire.

Selon l'invention, ce problème est résolu en prévoyant d'effectuer une seule fois (en théorie) le balayage, puis en provoquant ensuite, au fur et à mesure de la diffusion des programmes et des tables incorporées dans le flux, une mise à jour des différentes tables avec les informations disponibles dans le flux. En quelque sorte, la mise à jour des tables correspondant à un service nouveau, sur lequel l'utilisateur vient de zapper, est effectuée immédiatement. Toutefois, pour effectuer cette mise à jour, il faudrait attendre de recevoir la table NIT du réseau qui comporte un identifiant (0x40) qui est caractéristique du flux en cours de réception par le décodeur. Le réseau fait émettre en effet par les transpondeurs d'autres tables NIT, avec des identifiants différents (0x41), pour des flux que ces transpondeurs ne véhiculent pas. On doit donc être certain de la désignation du lot des tables du flux avant de les mettre à jour. En effet, il y a autant de table qu'il y a de services distribués par les différents média. Et on ne peut pas mettre à jour au hasard une des tables avec des données disponibles. Nanti de la bonne table NIT, le décodeur peut alors retrouver les tables SDT, PAT, PMT et EIT (et autres) correspondant au flux en cours de réception.

Malheureusement, les tables NIT ne sont pas rafraîchies très fréquemment. De sorte que la mise à jour doit être retardée jusqu'à la diffusion de la table NIT du flux en cours de réception, avec comme conséquence de ne pas disposer des informations utiles en temps voulu. Si l'utilisateur veut par exemple consulter immédiatement des informations montrables associées à un programme qu'il regarde, celles-ci peuvent ne pas avoir encore été mises à jour.

Dans l'invention, pour remédier à ce problème, on mesure la fréquence de porteuse du signal du flux reçu. Avec cette mesure, on est ensuite capable de rechercher dans des tables NIT mémorisées dans le décodeur (au moins lors du premier balayage) ou dans d'autres tables, une table qui possède cette fréquence comme descripteur d'une désignation d'un multiplex ou transpondeur repéré par ailleurs par une information ts_id et ontwk_id. On recherche alors dans le flux des tables SDT et PAT transmises qui possèdent dans leur en-tête des indications ts_id et ou ontwk_id correspondantes. Dans ces tables SDT et PAT transmises, on prélève des informations correspondant à des services identifiés par leur code svci, et on met à jour les tables EIT, p ou f, et PMT qui correspondent à ces triplets ts_id ontwk_id et svc_id.

L'invention a donc pour objet un procédé de collecte dans un décodeur de télévision, de signaux de paramètres de réglage de la réception de plusieurs services dans ce décodeur de télévision, comportant
- un enregistrement préalable général de signaux de paramètre dans des tables de paramètres pour une multiplicité de services,
caractérisé en ce qu'il comporte
- une mesure d'une fréquence porteuse d'un signal reçu,
- un repérage de tables référencées par cette fréquence porteuse, et
- une mise à jour de tables de paramètres avec des signaux de paramètres transportés par un flux d'information véhiculées sur cette fréquence porteuse

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1 à 3 : des figures déjà commentées montrant l'architecture de distribution des informations à acquérir par les décodeurs ;
- Figure 4 : une représentation schématique d'un décodeur utilisable pour mettre en oeuvre le procédé selon l'invention;
- figure 5 : une représentation du contenu des diverses tables permettant leur mise à jour à partir d'informations disparates.

La figure 4 montre un décodeur 1 pour mettre en oeuvre le procédé selon l'invention. Le décodeur 1 est en relation avec un dispositif de visualisation 2 pour afficher sur l'écran de ce dispositif de visualisation des programmes radiodiffusés reçus sur une entrée 3 du décodeur. D'une manière connue l'entrée 3 peut être reliée à une antenne terrestre 4, une antenne satellite 5, ou à un câble de télédistribution 6. L'antenne terrestre 4 est en relation radio électrique avec un centre 7 de rediffusion, l'antenne 5 est en relation avec un satellite 8, le câble 6 est relié à un circuit 9 de diffusion d'un opérateur de télévision. L'opérateur 9 peut être par ailleurs celui qui transmet au circuit de rediffusion 7 et au satellite 8 les informations que ces derniers ont à diffuser.

Le décodeur 1 comporte dans son principe un microprocesseur 10 en relation avec des circuits de réception 11 reliés à l'entrée 3. Le microprocesseur 10 est relié au récepteur 11 ainsi qu'à une mémoire programme 12 et à une mémoire de données 13 par l'intermédiaire d'un bus 14. Le bus 14 peut par ailleurs être utilisé pour transmettre au dispositif de visualisation 2 les images à afficher. D'une manière connue la mémoire programme 12 comporte un programme 15 intitulé MPEG-DVB apte à mettre en oeuvre une opération de balayage et de détection des paramètres de réglage dans le flux reçu sur l'entrée 3 pour régler le décodeur 1. Ces paramètres sont mémorisés dans la table 13 au moment de leur décodage.

Dans l'invention, on prévoit un enregistrement préalable général de tous les signaux de paramètres, si possible, et qui correspondent à une multiplicité de services. Cet enregistrement préalable peut être effectué par le lancement du programme 15. Il est possible toutefois de procéder autrement. Si la mémoire 13 est une mémoire non volatile, notamment du type mémoire dynamique sauvegardée par pile, ou du type mémoire EEPROM notamment de type flash EEPROM, on peut prévoir d'enregistrer en usine les tables complètes. Au besoin cet enregistrement préalable peut être réalisé au moment de l'installation du décodeur par un périphérique de programmation spécifique.

Dans l'invention pour résoudre les problèmes inhérents à la mise à jour, on prévoit de munir la mémoire programme 12 d'un programme complémentaire 16 de mise à jour. Le programme 16 comporte deux opérations principales. Il comporte d'abord une mesure de la fréquence porteuse du flux en cours de réception. Cette mesure est symbolisée ici par un circuit de mesure 17. En pratique, les circuits de réception 11 comportent un synthétiseur de fréquence commandé par le microprocesseur 10 et relié à un mélangeur (non représentés). Quand le microprocesseur 10 envoie un ordre à ce synthétiseur, cet ordre est en lui-même représentatif de la fréquence de porteuse sur laquelle le décodeur doit se caler. Il suffit d'utiliser cette information d'ordre pour en déduire par décodage ou par lecture d'une table une fréquence de porteuse.

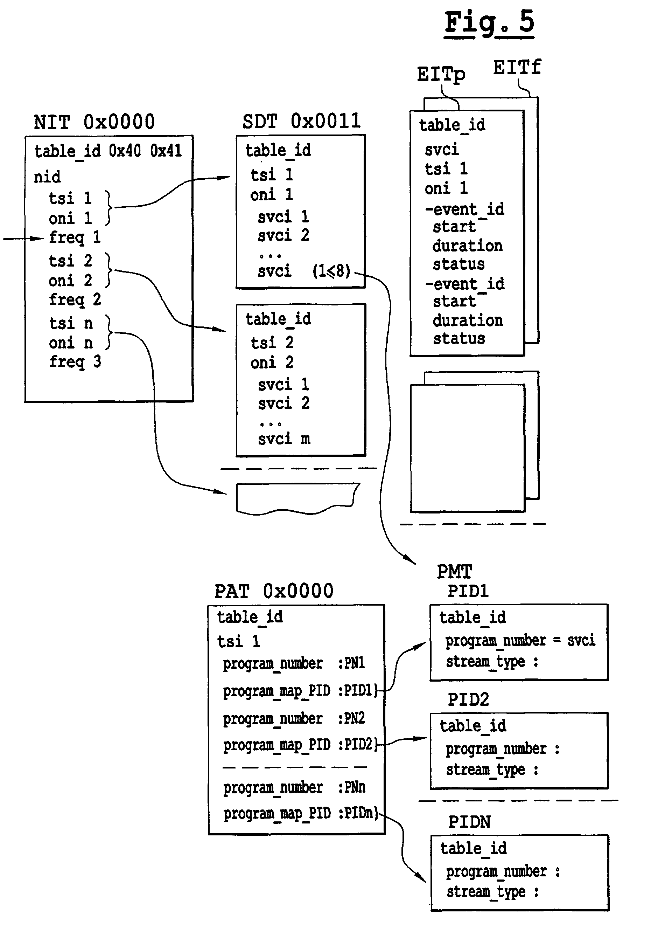

Figure 5, on a alors montré qu'il était possible d'accéder à une table NIT enregistrée dans le décodeur 10 qui posséderait en regard d'une désignation de transpondeur tsi1 un descripteur freq1 dont la valeur est égale à la valeur mesurée de fréquence. A partir de cette désignation tsi1, elle-même associée à une désignation d'un réseau origine oni1, il est possible de rechercher des tables SDT et PAT du flux en cours de réception qui comportent l'une et ou l'autre de ces désignations tsi1 et oni1. Dans ces tables SDT et PAT transmises, on prélève les désignations des services svci1, svci2, svcin (n plus petit ou égal à 8) qui sont véhiculées par le flux. Avec ces désignations de service, on peut compléter les tables EIT p et f et PMT mémorisées dans le décodeur. Notamment, la table PAT comporte pour un program_number, qui est identique à une identité d'un service svci, une information program_map_PID qui renseigne sur l'en-tête d'identification de paquet (PID) où se trouve une table PMT transmise dont le contenu, notamment le stream_type - le type de flux est une information utile. Dans le cas présent, on déduira automatiquement qu'un service qui n'a comme stream_type qu'une faculté audio est une radio, qu'un service qui a une faculté audio et une faculté vidéo est une chaîne de télévision, et qu'un service qui a une faculté OpTV est un service OpenTV.

Il est donc réalisé dans la mémoire 13 du décodeur 1 de l'invention une architecture de tables NIT SDT EIT PAT PMT et autres, non volatiles et correspondant aux tables transmises par le flux. Ces tables sont mises à jour ici sans avoir à se servir de la table NIT transmise par le flux. Il n'y a alors plus besoin de rebalayer systématiquement tous les flux, puisque la liste est remise à jour en temps réel et qu'elle est sauvegardée, au moins au passage en veille du décodeur. Les cas qui nécessitent un nouveau balayage sont l'apparition ou la disparition d'un nouveau transpondeur, ou bien un changement des paramètres de connexion d'un transpondeur (fréquence, débit symbole, correction d'erreur anticipée, ...) De ce point de vue, l'utilisateur garde toujours la possibilité de relancer avec sa télécommande 18 un balayage, par le programme 15, manuellement à tout moment. Ce balayage manuel peut de préférence être remplacé ou complété par un balayage automatique à la mise en veille du décodeur, ou par un balayage programmé la nuit par exemle à l'endroit du décodeur. En effet au moment de la mise en veille, ou par exemple 10 minutes après celle-ci, on peut estimer que l'utilisateur a abandonné l'utilisation de son décodeur et que celui-ci peut lancer une procédure de balayage. De préférence cette procédure de balayage automatique est interrompue si le décodeur est de nouveau sollicité pour une utilisation.

Le temps de balayage peut en outre être réduit en ne prenant en compte que les tables PSI minimales, requises pour reconstruire la liste : PAT, PMT, et, si elles sont présentes, les SDT. Ou encore on omet de balayer une plage de fréquence préalablement balayée en capitalisant par mémorisation ce précédent balayge. Cette dernière omission peut être automatique ou à la demande, des plages précédemment balayées étant mémorisées dans une table possédant un index de rafraichissement pour évaluer la durée séparant un éventuel nouveau balayage d'une date d'un ancien balayage.

Bien entendu la table 13 mise à jour est utilisée telle quelle pour paramètrer le décodeur avec les signaux de paramètres qui y sont enregistrés. En effet, ceux-ci occupent la place allouée aux signaux reçus par le flux lorsque l'utilisateur zappe, change de service (de chaîne).

## Revendications

1. Procédé de collecte dans un décodeur de télévision, de signaux de paramètres de réglage de la réception de plusieurs services dans ce décodeur de télévision, comportant
- un enregistrement préalable général de signaux de paramètre dans des tables de paramètres pour une multiplicité de services,
caractérisé en ce qu'il comporte
- une mesure d'une fréquence porteuse d'un signal reçu,
- un repérage de tables référencées par cette fréquence porteuse, et
- une mise à jour de tables de paramètres avec des signaux de paramètres transportés par un flux d'information véhiculées sur cette fréquence porteuse

2. Procédé selon la revendication 1, caractérisé en ce que l'enregistrement préalable est mémorisé dans une mémoire sauvegardée.

3. Procédé selon l'une des revendications 1 à 2, caractérisé en ce que l'enregistrement préalable est mémorisé dans une mémoire non volatile électriquement programmable et effaçable, par exemple du type EEPROM flash.

4. Procédé selon l'une des revendications 1 à 3, caractérisé en ce qu'on réitère l'enregistrement préalable général sporadiquement.

5. Procédé selon la revendication 4, caractérisé en ce que la réitération est entreprise à la demande de l'utilisateur.

6. Procédé selon l'une des revendications 4 à 5, caractérisé en ce que la réitération est entreprise périodiquement, de préférence la nuit à l'endroit du décodeur, ou lors d'une mise en veille de ce décodeur.

7. Procédé selon l'une des revendications 4 à 6, caractérisé en ce que lors de la réitération on omet de mettre à jour certaines catégories de tables.

8. Procédé selon l'une des revendications 4 à 6, caractérisé en ce que lors de la réitération, on omet de balayer des flux dont on a acquis les tables de paramètres par d'autres flux.

9. Procédé selon l'une des revendications 4 à 8, caractérisé en ce que lors de la réitération, on ne recherche pas les tables dites NIT, mais on recherche uniquement les tables dites SDT, PAT et PMT.

10. Procédé selon l'une des revendications 4 à 9, caractérisé en ce qu'on omet de balayer une plage de fréquence préalablement balayée.
